# EUROPÄISCHE PATENTSCHRIFT

(11) **EP 2 131 213 B1**
(45) Veröffentlichungstag und Bekanntmachung des Hinweises auf die Patenterteilung: **22.08.2012**
(21) Anmeldenummer: 09007067.3
(22) Anmeldetag: 27.05.2009
(51) Int. Cl.: G01V 3/15, E02F 9/24, A01B 1/02

(54) **Manuelles Grabungsgerät**
Manual digging device
Appareil d'excavation manuel

(30) Priorität: 04.06.2008 DE 202008007479 U
(43) Veröffentlichungstag der Anmeldung: 09.12.2009
(73) Patentinhaber: FIRMA ING. KLAUS EBINGER, D-51149 Köln (DE)
(72) Erfinder: Badorek, Joachim, 51515 Kürten (DE); Scherner, Michael, 52070 Aachen (DE); Ebinger, Klaus, 51143 Köln (DE)
(74) Vertreter: Heim, Hans-Karl

(56) Entgegenhaltungen:
- US-A- 3 976 564
- US-A- 4 983 281
- US-B1- 6 326 790
- Secon GmBH: "Schaufeldetektor", , 1. Januar 2006 (2006-01-01), XP000002657593, Gefunden im Internet: URL:http://secon-metaldetectors.com/defaul t.aspx?viewpage=product&pid=300&lid=1&cati d=1&varid=781 [gefunden am 2011-08-25]

## Beschreibung

Die Erfindung betrifft ein manuelles Grabungsgerät mit einem Griffelement und mit Grabungsmitteln. Das Griffelement weist ein erstes und ein zweites Ende auf, wobei an dem ersten Ende des Griffelementes die Grabungsmittel befestigt sind. Als manuelles Grabungsgerät im Sinne der Erfindung kann beispielsweise eine Handschaufel, ein Spaten oder auch eine Hacke angesehen werden.

Meist läuft die Suche nach sich im Erdboden befindlichen metallischen Objekten wie folgt ab. Zuerst wird mit einem größeren Metalldetektor, welcher oft eine tellerartige Sensoreinrichtung aufweist, das Arial vorsondiert, bis die grobe Position des sich im Erdboden befindlichen Objektes ermittelt wurde. Anschließend wird mit Hilfe von sogenannten Pinpointern nachsondiert. Pinpointer sind ebenfalls Metalldetektoren, die allerdings relativ klein und beispielsweise stabartig, ausgeführt sind. Anschließend wird mit einer Handschaufel oder einem anderen manuellen Grabungsgerät nach dem im Erdboden befindlichen Metallobjekt gesucht. Um während der Grabung mit der Handschaufel sicherzustellen, dass nicht an den im Erdboden befindlichen Objekten vorbeigegraben wird, wird wechselweise mit dem Pinpointer nachsondiert, um die Grabung in die richtige Richtung weiterzuführen.

Hierzu sind die Pinpointer meist schmal ausgeführt, um die Feinsondierung im Grabungsloch durchzuführen. Da jedoch bei dem Ausgraben des im Erdboden befindlichen Metallobjektes in Wechselschritten gegraben und erneut der Pinpointer eingesetzt werden muss, ist dieses Verfahren umständlich und zeitintensiv.

Aus der US 4,983,281 ist ein Metalldetektor bekannt, der einen längeren Schaft aufweist, an dessen unterem Ende ein Detektorkopf angeordnet ist. An dem Schaft des Metalldetektors ist ein Schaufelsieb über Klemmen befestigt. Die Schaufel kann dabei - zwischen einer Position zum Schaufeln und einer Position zur Lagerung verstellt werden.

Der Erfindung liegt daher die **Aufgabe** zugrunde, ein manuelles Grabungsgerät zu schaffen, welches das Lokalisieren und Ausgraben eines Objektes, insbesondere in Grabungslöchern, vereinfacht und effektiviert.

Die Aufgabe wird erfindungsgemäß durch ein manuelles Grabungswerkzeug mit den Merkmalen des Anspruchs 1 gelöst.

Weitere vorteilhafte Ausführungsformen sind in den abhängigen Ansprüchen, der Beschreibung sowie den Figuren und deren Beschreibung angegeben.

Gemäß dem Anspruch 1 weist das erfindungsgemäße manuelle Grabungsgerät, welches auch als Grabungswerkzeug bezeichnet werden kann, im Bereich des Griffelementes eine Detektorvorrichtung und eine Anzeigevorrichtung auf. Die Detektorvorrichtung ist bevorzugt zur Ermittlung von Fremdkörpern im Erdbereich ausgelegt und kann beispielsweise in Form eines Metalldetektors ausgeführt sein. Die Anzeigeeinrichtung ist zur Anzeige eines Detektionsergebnisses der Detektoreinrichtung ausgelegt.

Ein Grundgedanke der Erfindung kann darin gesehen werden, eine Vorrichtung zu schaffen, die sowohl zum Graben in einem Grabungsloch wie auch zur Nachsondierung geeignet ist. Zu diesem Zweck wurde zusätzlich zu den Grabungsmitteln, welche auch herkömmlich an einem Grabungsgerät vorhanden sind, eine Detektoreinrichtung mit einer entsprechenden Anzeigeeinrichtung vorgesehen. Hierdurch ist es möglich, beispielsweise sofern Grabungsgeräte in Form einer Schaufel ausgeführt ist, in dem Grabungsloch zu graben und ohne die Verwendung eines weiteren Gerätes eine Nachsondierung durchzuführen, um die Grabung in die richtige Richtung fortzusetzen. In diesem Zusammenhang ist insbesondere vorteilhaft, dass keine zwei separaten Vorrichtungen verwendet werden müssen, da Grabungslöcher oft relativ eng sind und das gleichzeitige Einbringen von zwei Vorrichtungen problematisch ist. Außerdem können sich durch das Vorhandensein eines Grabungsgerätes im Grabungsloch während der Nachsondierung mit einer Detektoreinrichtung Problem durch eine Beeinflussung der Dektektionsergebnisse durch das Grabungsgerät ergeben.

Die Detektoreinrichtung kann beliebig aufgebaut und an jeder geeigneten Stelle des Grabungswerkzeuges vorgesehen sein. Bevorzugt ist jedoch, wenn eine Detektorelektronik und eine Sensoreinrichtung, insbesondere für die Detektoreinrichtung, im Griffelement vorhanden sind. So werden keine weiteren Anbauelemente an dem Grabungsgerät benötigt, und die generelle Handhabung wird vereinfacht. Hierbei kann die Detektoreinrichtung als verkleinerte herkömmliche Detektoreinrichtung ausgeführt sein und bevorzugt auf Microprozessortechnik basieren.

Als vorteilhaft hat sich herausgestellt, wenn die Sensoreinrichtung im Bereich des zweiten Endes des Griffelementes vorgesehen ist. An dieser Stelle hat sie den größten Abstand zu den am anderen Ende befindlichen Grabungsmitteln, wodurch die Beeinflussung verringert wird. Außerdem ist es so möglich, zur Nachsondierung im Grabungsloch lediglich das Grabungsgerät umzudrehen und mit dem umgedrehten Grabungsgerät die Funktion eines herkömmlichen Pinpointers auszuführen.

Bevorzugt ist hierbei, wenn die Sensoreinrichtung eine Induktivität aufweist. Zusätzlich kann auch ein Ferritkern vorgesehen sein, um den die Induktivität beispielsweise gewickelt ist. Hierdurch ist es möglich, eine einfache und dennoch sensible Sensoreinrichtung aufzubauen, die auch einen geringen Platzbedarf hat und somit relativ einfach im Griffelement des Grabungsgerätes integriert werden kann.

Zur Anzeige eines Detektionsergebnisses der Detektoreinrichtung sind verschiedene Ausgaben möglich. Hierzu kann die Anzeigeeinrichtung beispielsweise zur Ausgabe von haptischen, akustischen und/oder optischen Signalen ausgebildet sein. Als besonders wirkungsvoll hat sich hierbei eine haptische Ausgabe in Form von Vibrationen herausgestellt. Derartige Vibrationen können durch relativ günstige Bauteile, wie sie im Mobilfunkbereich verwendet werden, erzeugt werden und bieten den Vorteil, dass sie gut durch den Benutzer eines derartigen Gerätes bei der Nahsondierung erkannt werden. Ein weiterer Vorteil einer Vibrationsanzeige ist, dass die aus dem Mobilfunkbereich bekannten Vibrationsalarme relativ energieeffektiv arbeiten und so eine in dem Grabungsgerät vorhandene Energieversorgung wenig belasten, wodurch eine längere Einsatzdauer unterstützt wird. Es sind aber auch Kombinationen von mehreren verschiedenen Anzeigemöglichkeiten denkbar.

Zur Energieversorgung können beliebige Energiespeicher intern oder extern am Grabungsgerät vorgesehen sein. Bevorzugt ist es jedoch, wenn diese Energiespeicher im Bereich des Griffelementes vorgesehen sind, so dass diese, ähnlich wie zuvor in Bezug auf die Sensoreinrichtung beschrieben, nicht als zusätzliche Bauteile am Grabungsgerät vorgesehen sein müssen, was die Handhabung unkomfortabel und umständlicher macht.

Wenn die Energiespeichereinrichtung in Form von wiederaufladbaren Energiespeichern, beispielsweise als Akkus, vorgesehen ist, ist es vorteilhaft, wenn im Bereich des Griffelementes ein Anschluss zum Laden dieser Energiespeicher ausgebildet ist. So ist es beispielsweise denkbar, die Energiespeicher in Form von Akkus im Inneren des Griffelementes vorzusehen und lediglich einen Ladeanschluss zum Anschluss eines externen Ladegerätes vorzusehen, um diese Akkus wieder aufzuladen. In diesem Zusammenhang ist es auch möglich, eine Anzeigeeinrichtung vorzusehen, die den Batteriestand von wieder verwendbaren oder nicht wieder verwendbaren Energiespeichern anzeigt.

Grundsätzlich kann die Detektoreinrichtung, welche die Detektorelektronik und die Sensoreinrichtung aufweist, mit jeder beliebigen Technik betrieben werden, welche zur Suche von Objekten, insbesondere Metallobjekten, geeignet ist. Als besonders wirkungsvoll hat sich dabei erwiesen, wenn die Detektorelektronik und die Sensoreinrichtung entsprechend der Pulsinduktionstechnik ausgeführt sind und betrieben werden. Hierdurch kann eine kleine Bauform der Detektorelektronik und der Sensoreinrichtung unterstützt werden, ohne jedoch die Genauigkeit des Detektionsergebnisses negativ zu beeinflussen. Eine Alternative zur Pulsinduktionstechnik ist die Sinustechnik. Die Detektorelektronik und/oder die Sensoreinrichtung kann auch wechselweise mit unterschiedlichen Detektionstechniken betrieben werden bzw. zum Betrieb mit mehreren unterschiedlichen Betriebsarten ausgelegt sein.

Um eine ungewollte Beeinflussung der Sensorelektronik auszuschließen, ist diese bevorzugt als automatisch kalibrierend ausgeführt. Hierdurch können Abweichungen, welche beispielsweise durch Metallelemente, die am Grabungsgerät vorgesehen sind, oder durch bestimmte Bodentypen entstehen, ausgeblendet werden, so dass eine zuverlässige Detektion möglich ist. Die automatische Kalibrierung ist insbesondere daher bevorzugt, da in diesem Fall keine zusätzlichen manuellen Einstellmöglichkeiten für den Benutzer des erfindungsgemäßen Grabungsgerätes vorgesehen sein müssen, die aufgrund des geringen Platzangebotes am Grabungsgerät nur schwer unterzubringen wären.

Grundsätzlich kann das Griffelement in beliebiger Weise ausgeführt werden. Bevorzugt ist es jedoch, wenn es eine wesentliche zylindrische Form aufweist. Hierbei ist es auch möglich, dass es teilweise hohl ausgebildet ist. In diesen Hohlraum innerhalb des Griffelementes können dann die Detektionseinrichtung mit der Detektorelektronik und der Sensoreinrichtung sowie Anzeigeeinrichtung integriert werden.

Selbstverständlich ist es auch möglich, nur Teile davon zu integrieren. In ähnlicher Weise kann auch der Energiespeicher zum Betreiben der Detektoreinrichtung und der Anzeigeeinrichtung im Inneren des Griffelementes vorgesehen sein.

Beim Aufbau des Grabungsgerätes hat es sich als vorteilhaft herausgestellt, wenn das zweite Ende des Griffelementes mit einer Abschlusskappe verschlossen ist, und die Sensorelektronik sowie die Sensoreinrichtung über diese Abschlusskappe fixiert sind. Hierdurch ist es möglich, die Detektorelektronik und die Sensoreinrichtung in das Griffelement über das zweite Ende einzubringen. Das Griffelement wird dann mit der Abschlusskappe verschlossen, die gleichzeitig die Detektorelektronik sowie die Sensoreinrichtung hält. Hierdurch ist eine einfache Montage möglich. Außerdem ist der Zugang zu Wartungszwecken relativ einfach möglich.

Zur Aktivierung und Deaktivierung der Sensoreinrichtung und/oder der Anzeigeeinrichtung sind verschiedene Ausführungen möglich. Besonders effektiv ist jedoch ein Druckschalter, welcher im Bereich des Griffelementes vorgesehen ist. Dieser Druckschalter kann in einfacher Weise schmutz- bzw. wasserdicht ausgeführt sein. Andere Möglichkeiten sind Dreh- oder Wippschalter, die sich ebenfalls im Bereich des Griffelementes befinden.

Als Grabungsmittel für das manuelle Grabungsgerät kann beispielsweise eine Schaufeloder Hackenblatt verwendet werden. Grundsätzlich sind aber auch andere Grabungsmittel denkbar, die an dem Griffelement befestigt werden.

Mit dem erfindungsgemäßen manuellen Grabungsgerät, beispielsweise in Form einer Schaufel, kann das bekannte Grabungsverfahren und der Lokalisierungsvorgang wie folgt vereinfacht und beschleunigt werden. Zuerst wird mit einem großen Metalldetektor flächig vorsondiert, so dass der potentielle Grabungsbereich von mehreren Quadratmetern auf eine einige wenige eingeschränkt werden kann. Anschließend wird mit Hilfe der Detektoreinrichtung des Grabungsgerätes eine Nachsondierung durchgeführt, um eine genauere Lokalisierung des sich im Boden befindlichen Objektes zu ermöglichen. Anschließend wird das Grabungsgerät gedreht und mit den Grabungsmitteln begonnen zu graben. Um während des Grabens sicherzustellen, dass sich das Grabungsloch bzw. Grabungsgebiet in die richtige Richtung erstreckt, wird während des Grabens das Grabungsgerät umgedreht, die Detektoreinrichtung aktiviert und mittels dieser in Art eines Pinpointers eine Nachsondierung des Grabungsgebietes durchgeführt, wobei mögliche aufgetretene Abweichungen festgestellt werden. Anschließend wird erneut mit dem Graben mit den Grabungsmitteln des Grabungsgerätes begonnen. Die beiden Schritte des Nachsondierens und erneuten Grabens werden mehrfach ausgeführt, bis das gesuchte Objekt gefunden wurde.

Die Erfindung wird nachfolgend anhand eines Ausführungsbeispiels und schematischen Zeichnungen näher erläutert. In diesen Zeichnungen zeigen:
- Fig. 1: eine Explosionsdarstellung eines erfindungsgemäßen manuellen Grabungsgerätes; und
- Fig. 2: eine Aufsicht auf das manuelle Grabungsgerät gemäß Fig. 1.

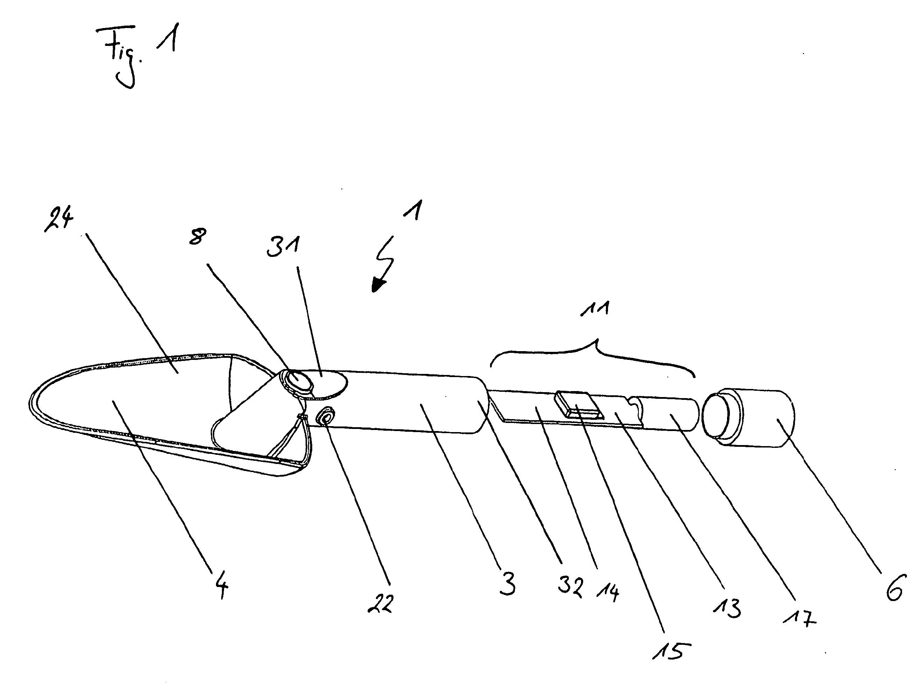

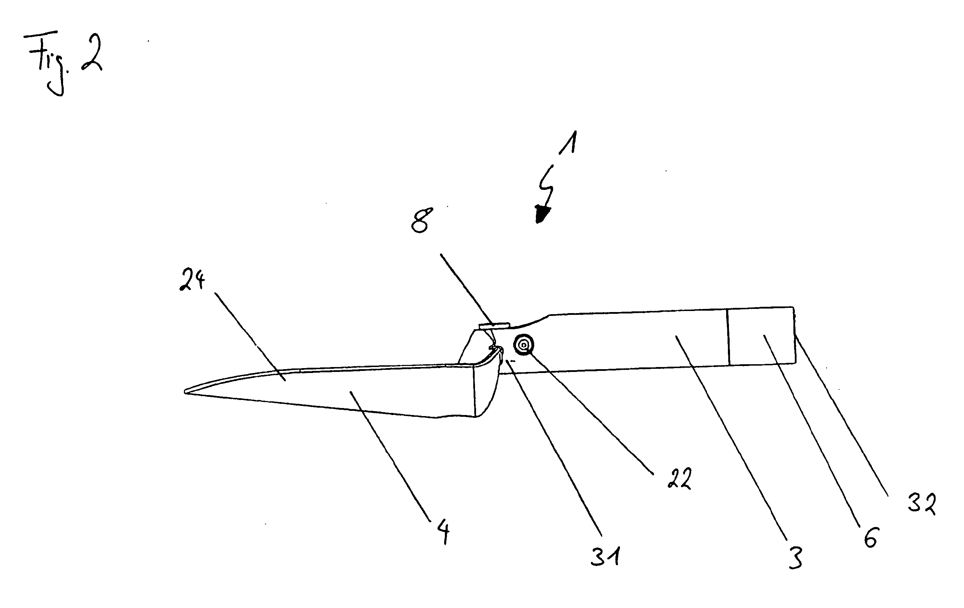

In den beiden Figuren 1 und 2 ist jeweils ein manuelles Grabungsgerät 1 dargestellt, welches die Form einer Schaufel aufweist. Hierzu ist das manuelle Grabungsgerät 1 in Fig. 1 in einer Explosionsdarstellung gezeigt, wohingegen es in Fig. 2 in einer seitlichen Ansicht dargestellt ist. Das Grabungsgerät 1, welches auch als Grabungswerkzeug oder als intelligente Schaufel bezeichnet werden kann, weist als die wesentlichen Elemente ein Griffelement 3 sowie Grabungsmittel 4 auf. Diese Grabungsmittel 4 sind hier als Schaufelblatt 24 ausgeführt.

Das Griffelement 3 weist ein vorderes Ende 31 und ein hinteres Ende 32 auf. Am vorderen Ende 31 ist das Schaufelblatt 24 mit dem Griffelement 3 verbunden. In dem Ausführungsbeispiel ist eine feste Verbindung zwischen diesen beiden Bereichen dargestellt. Es ist aber ebenfalls eine gelenkige Verbindung möglich.

In der Explosionsdarstellung von Fig. 1 ist die innerhalb des Griffelementes 3 vorgesehene Detektoreinrichtung 11 dargestellt. Diese besteht maßgeblich aus der Detektorelektronik 13 und einer Sensoreinrichtung 17, welche auch als Sensorkopf bezeichnet wird. Hierbei ist die Sensoreinrichtung 17 mit einem Ferritkern und einer entsprechend aufgewickelten Induktivität ausgeführt. Die Sensorelektronik 13 ist als miniaturisierte Suchelektronik vorgesehen, welche auf einer Platine 14 aus integrierten Schaltkreisen 15 aufgebaut ist. Zusätzlich kann auf der Platine 14 oder verbunden mit der Detektoreinrichtung 11 auch eine Anzeigeeinrichtung vorgesehen sein. Hierbei bietet sich beispielsweise eine Einrichtung zum Auslösen eines Vibrationsalarms an, so dass das Griffelement 3 vibriert, wenn ein positives Detektionsergebnis durch die Detektoreinrichtung 11 festgestellt wird.

Die Montage der Detektoreinrichtung 11 mit der Detektorelektronik 13 und der Sensoreinrichtung 17 erfolgt durch das zweite Ende 32 des Griffelementes 3. Hierzu kann die Detektoreinrichtung 11 in der Abschlusskappe 6 des Griffelementes 3 fixiert werden. In der hier dargestellten Ausführungsform ist insbesondere die Sensoreinrichtung 17 an den Innendurchmesser der Abschlusskappe 6 angepasst, so dass diese gut ineinander passen. Anschließend wird die Detektoreinrichtung 11 mit aufgebrachter Abschlusskappe 6 in das in diesem zylindrische und hohle rohrförmige Griffelement 3 eingebracht und eingepasst. In einer anderen Ausführungsform kann die Montage auch in umgekehrter Reihenfolge durchgeführt werden. Das bedeutet, dass die Detektoreinrichtung 11 zuerst in das Griffelement 3 eingebracht wird und anschließend mit der Verschlusskappe 6 fixiert wird.

Zum Aktivieren der Detektoreinrichtung 11 und einem möglichen Anzeigeelement ist auf dem Griffelement 3 ein Schalter 8 vorgesehen. Dieser ist hier als Druckschalter ausgeführt. Er kann entweder über eine direkte Verkabelung mit der Detektoreinrichtung 11 verbunden oder derart ausgeführt sein, dass auf der Platine 14 entsprechende Kontakte vorhanden sind, die im eingesetzten Zustand der Detektoreinrichtung 11 im Griffelement 3 einen Kontakt mit dem Druckschalter 8 aufbauen.

Zur Energieversorgung der Detektoreinrichtung 11 und die Anzeigeeinrichtung wäre eine externe Energieversorgung möglich. Dies ist aber unvorteilhaft und würde die Verwendung des erfindungsgemäßen Grabungsgerätes, welches auch als Schaufel-Pinpointer bezeichnet werden kann, umständlicher machen. Daher sind ebenfalls in dem hohl ausgeführten Griffelement 3 Energiespeicher in Form von Akkus oder Batterien vorgesehen. Bei der Verwendung von Akkus können diese über ein externes Ladegerät über den Anschluss 22, welcher auch als Buchse bezeichnet werden kann, aufgeladen werden. Es ist aber ebenfalls möglich, den Anschluss 22 oder weitere Anschlüsse derart auszuführen, dass hierüber externe Lautsprecher oder ein Kopfhörer angeschlossen werden können, die akustische Signale wiedergeben.

Das hier in Bezug auf die Figuren beschriebene Ausführungsbeispiel bezieht sich auf ein manuelles Grabungsgerät, welches in Form einer Handschaufel ausgeführt ist. Es ist aber ebenfalls möglich, das erfindungsgemäße Prinzip auf größere Schaufeln, Spaten oder Hacken zu übertragen, wobei das Griffelement in diesem Fall in Form des Stieles verwirklicht ist. In diesem Stiel kann dann die miniaturisierte Suchelektronik integriert werden.

Mit dem erfindungsgemäßen manuellen Grabungsgerät ist es somit möglich, den Ausgrabungs- und Lokalisierungsvorgang dadurch zu vereinfachen und zu effektivieren, dass keine zwei unterschiedlichen Geräte mehr eingesetzt werden müssen, sondern im Grabungsgerät eine miniaturisierte Detektoreinrichtung vorhanden ist. Hierdurch kann das Graben und Lokalisieren in einem Arbeitsgang erledigt werden.

## Patentansprüche

1. Manuelles Grabungsgerät
mit einem Griffelement (3) mit einem ersten (31) und einem zweiten (32) Ende, und
mit Grabungsmitteln (4), die an dem ersten Ende (31) des Griffelementes (3) befestigt sind,
wobei im Bereich des Griffelementes (3) eine Detektoreinrichtung (11) mit einer Detektorelektronik (13) und einer Sensoreinrichtung (17) und eine Anzeigeeinrichtung vorhanden sind,
wobei die Anzeigeeinrichtung zur Anzeige eines Detektionsergebnisses der Detektoreinrichtung (11) ausgeführt ist,
**dadurch gekennzeichnet,**
**dass** die Detektorelektronik (13) und die Sensoreinrichtung (17) im Griffelement (3) vorhanden sind, und
**dass** die Sensoreinrichtung (17) eine Induktivität und einen Ferritkern aufweist.

2. Grabungsgerät nach Anspruch 1 ,
**dadurch gekennzeichnet,**
**dass** die Sensoreinrichtung (17) im Bereich des zweiten Endes (32) des Griffelementes (3) vorgesehen ist.

3. Grabungsgerät nach einem der Ansprüche 1 bis 2,
**dadurch gekennzeichnet,**
**dass** die Anzeigeeinrichtung zur Ausgabe von haptischen, akustischen und/oder optischen Signalen ausgebildet ist.

4. Grabungsgerät nach einem der Ansprüche 1 bis 3,
**dadurch gekennzeichnet,**
**dass** zur Energieversorgung der Detektorelektronik (13) und der Sensoreinrichtung (17) Energiespeicher im Bereich des Griffelementes (3) vorgesehen sind.

5. Grabungsgerät nach einem der Ansprüche 1 bis 4,
**dadurch gekennzeichnet,**
**dass** im Bereich des Griffelementes (3) ein Anschluss (22) zum Laden der Energiespeicher ausgebildet ist.

6. Grabungsgerät nach einem der Ansprüche 1 bis 5,
**dadurch gekennzeichnet,**
**dass** die Detektorelektronik (13) und die Sensoreinrichtung (17) zum Betreiben entsprechend der Pulsinduktionstechnik und/oder Sinustechnik ausgeführt sind.

7. Grabungsgerät nach einem der Ansprüche 1 bis 6,
**dadurch gekennzeichnet,**
**dass** die Detektorelektronik (13) zur automatischen Kalibrierung eingerichtet ist.

8. Grabungsgerät nach einem der Ansprüche 1 bis 7,
**dadurch gekennzeichnet,**
**dass** das Griffelement (3) eine im Wesentlichen zylindrische Form aufweist und zumindest teilweise hohl ausgebildet ist.

9. Grabungsgerät nach einem der Ansprüche 1 bis 8,
**dadurch gekennzeichnet,**
**dass** das zweite Ende (32) des Griffelementes (3) mittels einer Abschlusskappe (6) verschlossen ist und
**dass** die Detektorelektronik (13) und die Sensoreinrichtung (17) über die Abschlusskappe (6) fixiert sind.

10. Grabungsgerät nach einem der Ansprüche 1 bis 9,
**dadurch gekennzeichnet,**
**dass** ein Schalter (8) zum Aktivieren und Deaktivieren der Sensoreinrichtung (11) und der Anzeigeeinrichtung im Bereich des Griffelementes (3) vorgesehen sind.

11. Grabungsgerät nach einem der Ansprüche 1 bis 10,
**dadurch gekennzeichnet,**
**dass** das Griffelement (3) derart ausgebildet ist, um eine Montage zumindest der Detektoreinrichtung (11) über das zweite Ende (32) zu ermöglichen.

12. Grabungswerkzeug nach einem der Ansprüche 1 bis 11,
**dadurch gekennzeichnet,**
**dass** die Grabungsmittel (4) als Schaufelblatt (24) oder Hackenblatt ausgebildet sind.

## Claims

1. Manual digging device
with a grip element (3) with a first (31) and a second (32) end,
and
with digging means (4) which are fixed at the first end (31) of the grip element (3),
wherein a detector unit (11) with detector electronics (13) and with a sensor unit (17) and a display unit are present in the region of the grip element (3),
wherein the display unit is designed to display a detection result of the detector unit (11),
**characterised in that**
the detector electronics (13) and the sensor unit (17) are present in the grip element (3), and
the sensor unit (17) has an inductance and a ferrite core.

2. Digging device according to claim 1,
**characterised in that**
the sensor unit (17) is provided in the region of the second end (32) of the grip element (3).

3. Digging device according to one of the claims 1 to 2,
**characterised in that**
the display unit is designed to output touch-based, acoustic and / or optical signals.

4. Digging device according to one of the claims 1 to 3,
**characterised in that**
energy storage devices are provided in the region of the grip element (3) to supply energy to the detector electronics (13) and the sensor unit (17).

5. Digging device according to one of the claim 1 to 4,
**characterised in that**
a connection (22) for charging the energy storage devices is formed in the region of the grip element (3).

6. Digging device according to one of the claim 1 to 5,
**characterised in that**
the detector electronics (13) and the sensor unit (17) are designed to operate corresponding to pulse induction technology and / or sinus technology.

7. Digging device according to one of the claims 1 to 6,
**characterised in that**
the detector electronics (13) are adapted for automatic calibration.

8. Digging device according to one of the claims 1 to 7,
**characterised in that**
the grip element (3) has a substantially cylindrical form and is at least partially hollow.

9. Digging device according to one of the claims 1 to 8,
**characterised in that**
the second end (32) of the grip element (3) is closed by means of a closing cap (6) and
the detector electronics (13) and the sensor unit (17) are fixed via the closing cap (6).

10. Digging device according to one of the claims 1 to 9,
**characterised in that**
a switch (8) for activating and deactivating the sensor unit (11) and the display unit is provided in the region of the grip element (3).

11. Digging device according to one of the claims 1 to 10,
**characterised in that**
the grip element (3) is formed in such a way as to facilitate assembly at least of the detector unit (11) via the second end (32).

12. Digging tool according to one of the claims 1 to 11,
**characterised in that**
the digging means (4) are formed as a shovel blade (24) or a hoe blade.

## Revendications

1. Appareil d'excavation manuel
avec un élément formant poignée (3) comportant une première (31) et une deuxième (32) extrémités, et
avec des moyens d'excavation (4) qui sont fixés à la première extrémité (31) de l'élément formant poignée (3),
dans lequel au niveau de l'élément formant poignée (3) se trouvent un dispositif détecteur (11) avec une électronique de détection (13) et un dispositif capteur (17) et un dispositif d'affichage,
dans lequel le dispositif d'affichage est conçu pour afficher un résultat de détection du dispositif détecteur (11),
***caractérisé***
***en ce que*** l'électronique de détection (13) et le dispositif capteur (17) sont présents dans l'élément formant poignée (3), et
***en ce que*** le dispositif capteur (17) comprend une inductance et un noyau en ferrite.

2. Appareil d'excavation selon la revendication 1, ***caractérisé en ce que*** le dispositif capteur (17) est prévu au niveau de la deuxième extrémité (32) de l'élément formant poignée (3).

3. Appareil d'excavation selon l'une quelconque des revendications 1 à 2,
***caractérisé en ce que*** le dispositif d'affichage est réalisé pour délivrer des signaux sensoriels, acoustiques et/ou optiques.

4. Appareil d'excavation selon l'une quelconque des revendications 1 à 3,
***caractérisé en ce que**,* pour l'alimentation en énergie de l'électronique de détection (13) et du dispositif capteur (17), il est prévu des accumulateurs d'énergie au niveau de l'élément formant poignée (3).

5. Appareil d'excavation selon l'une quelconque des revendications 1 à 4,
*caractérisé en ce qu*'au niveau de l'élément formant poignée (3) est formé un raccordement (22) pour charger les accumulateurs d'énergie.

6. Appareil d'excavation selon l'une quelconque des revendications 1 à 5,
***caractérisé en ce que*** l'électronique de détection (13) et le dispositif capteur (17) sont réalisés pour un fonctionnement suivant la technique de l'induction pulsée et/ou suivant la technique sinusoïdale.

7. Appareil d'excavation selon l'une quelconque des revendications 1 à 6,
***caractérisé en ce que*** l'électronique de détection (13) est équipée pour un calibrage automatique.

8. Appareil d'excavation selon l'une quelconque des revendications 1 à 7,
***caractérisé en ce que*** l'élément formant poignée (3) présente pour l'essentiel une forme cylindrique et est réalisé au moins partiellement creux.

9. Appareil d'excavation selon l'une quelconque des revendications 1 à 8,
***caractérisé***
***en ce que*** la deuxième extrémité (32) de l'élément formant poignée (3) est fermée au moyen d'un capuchon (6), et
***en ce que*** l'électronique de détection (13) et le dispositif capteur (17) sont fixés par l'intermédiaire du capuchon (6).

10. Appareil d'excavation selon l'une quelconque des revendications 1 à 9,
***caractérisé en ce* qu'**un commutateur (8) est prévu pour activer et désactiver le dispositif capteur (11) et le dispositif d'affichage est prévu au niveau de l'élément formant poignée (3).

11. Appareil d'excavation selon l'une quelconque des revendications 1 à 10,
***caractérisé en* ce *que*** l'élément formant poignée (3) est réalisé de manière à permettre un montage d'au moins le dispositif détecteur (11) sur la deuxième extrémité (32).

12. Appareil d'excavation selon l'une quelconque des revendications 1 à 11,
***caractérisé en ce que*** le moyen d'excavation (4) est conformé en lame de pelle (14) ou de bêche.
